# EUROPÄISCHE PATENTSCHRIFT

(11) **EP 0 561 813 B1**
(45) Veröffentlichungstag und Bekanntmachung des Hinweises auf die Patenterteilung: **31.01.1996**
(21) Anmeldenummer: 91920017.0
(22) Anmeldetag: 15.11.1991
(51) Int. Cl.: G05B 19/19

(54) **VERFAHREN ZUR ERMITTLUNG VON VORSTEUERPARAMETERN FÜR EINE LAGEREGELUNG**
METHOD OF DETERMINING PILOT POSITION-CONTROL PARAMETERS
PROCEDE POUR LA DETERMINATION DE PARAMETRES DE COMMANDE PILOTE POUR UNE REGULATION DE POSITION

(30) Priorität: 12.12.1990 DE 4039620
(43) Veröffentlichungstag der Anmeldung: 29.09.1993
(73) Patentinhaber: ROBERT BOSCH GMBH, D-70442 Stuttgart (DE)
(72) Erfinder: KUHN, Thomas, D-6120 Erbach-Erlenbach (DE); GRIMM, Wolfgang, D-7250 Leonberg (DE); BECK, Matthias, D-6120 Michelstadt (DE)
(86) Internationale Anmeldenummer: DE9100891
(87) Internationale Veröffentlichungsnummer: WO9210797

(56) Entgegenhaltungen:
- TECHNISCHE RUNDSCHAU Bd. 81, Nr. 36, 8. September 1989, BERN,CH Seiten 164 - 167; KLAUS MEZGER UND PASCAL HULLIGER: 'Kleinste Schlepp- und Bahnfehler in NC- Systemen'
- PATENT ABSTRACTS OF JAPAN vol. 10, no. 312 (P-509)(2368) 23. Oktober 1986 &JP-A-61 122 720(FUJITSU LTD) 10.Juni 1986

## Beschreibung

### Stand der Technik

Die Erfindung geht aus von einem Verfahren zur Erhöhung der Bahngenauigkeit numerisch gesteuerter Werkzeugmaschinen mit den gattungsgemäßen Merkmalen des Hauptanspruchs. Ein Vorschlag, die Bahngenauigkeit durch Aufschaltung von Hilfsgrößen zu erhöhen, ist bekannt aus der Zeitschrift für industrielle Fertigung, 1978, Seiten 329 bis 333. In der Schrift werden verschiedene Möglichkeiten für die Beeinflussung der Führungsgröße der Lageregelung einer Werkzeugmaschine beschrieben. Die vorgeschlagenen Anordnungen zielen vor allem darauf ab, die Bahngenauigkeit beim Durchfanren einer Ecke zu verbessern. Bei dieser bekannten Methode der Vorsteuerung wird das Lage-Sollsignal durch Addition zusätzlicher, geeignet gewichteter Steuersignale vorgesteuert. Vorgeschlagen ist insbesondere, eine Vorsteuerung durch Aufschaltung eines Hilfssignals zu realisieren, welches auf der einfachen Zeitableitung der Führungsgröße basiert. Der Schrift ist aber nicht entnehmbar, wie dabei ein zur Wichtung des Hilfssignals geeigneter Vorsteuerparameter systematisch gewonnen werden kann. Auch beschränkt sich die Schrift bezüglich der Hilfsgrößenaufschaltung auf die Möglichkeit der Geschwindigkeitsvorsteuerung, das heißt auf die Aufschaltung eines zu Führungsgeschwindigkeit proportionalen Hilfssignals. Die Vorsteuerung der Führungsbeschleunigung, das heißt, die Hilfsgrößenaufschaltung eines zur Führungsbeschleunigung proportionalen Beschleunigungssignals, oder höherer Ableitungen der Führungsgröße ist hingegen nicht vorgesehen. Die Schrift macht entsprechend auch keine Angaben, wie die für die Durchführung der Vorsteuerung höherer Ableitungen der Führungsgröße benötigten Vorsteuerparameter gewonnen werden können.

Aus der EP 0 184 036 ist ebenfalls ein Steuer-Verfahren für NC-Maschinen bekannt, welches mit der Methode der Vorsteuerung arbeitet. Weiter sind im Handel NC-Steuerungen erhältlich, beispielsweise bei den Firmen FANUC und OSAI, Japan, welche ebenfalls die Methode der Geschwindigkeitsvorsteuerung verwenden. Die benötigten Vorsteuerparameter sind dabei fest vorgegeben oder werden empirisch für jede Maschine eingestellt.

Aufgabe der vorliegenden Erfindung ist es, ein Verfahren anzugeben, das für eine beliebige Maschine eine systematische Ermittlung der Vorsteuerparameter erlaubt.

Die Aufgabe wird gelöst durch ein Verfahren mit den kennzeichnenden Merkmalen des Hauptanspruchs. Das Verfahren ist nicht maschinenspezifisch und für jede beliebige Maschine anwendbar. Es ist durchführbar, ohne eine aufwendige Identifikation der Regelstrecke vornehmen zu müssen. Es gestattet neben der Ermittlung eines Parameters für die Geschwindigkeitsvorsteuerung in einfacher Weise die Ermittlung weiterer Parameter für eine Beschleunigungsvorsteurung sowie für eine Ruckvorsteuerung und ist auf jede beliebige Lageregelstrecke anwendbar. Es kann in vorteilhafter Weise automatisch durchgeführt werden und eignet sich insbesondere für die Implementierung in einem Mikrorechner. Der Auswertungs-Algorithmus ist einfach strukturiert, wodurch er bereits in sehr kostengünstige Steuerungen aufgenommen werden kann. Ein weiterer Vorteil ist, daß bei Vorsteuerung von höheren Ableitungen der Lageführungsgröße mit erfindungsgemäß gewonnenen Vorsteuerparametern für eine große Zahl verschiedener Lageregelstrecken der Schleppfehler auch im dynamischen Bewegungszustand nahezu Null wird. Ein weiter Vorzug des Verfahrens ist, daß es sehr schnell durchgeführt werden kann. Das erfindungsgemäße Verfahren wird im folgenden in der Beschreibung und anhand der Zeichnung näher beschrieben.

### Zeichnung

Es zeigen: Bild 1 ein Strukturbild einer Anordnung zur Durchführung des erfindungsgemäßen Verfahrens füt eine Achse, Bild 2 für die Ermittlung der Vorsteuerparameter verwendete Lageführungsgrößen als Funktion der Zeit.

### Beschreibung

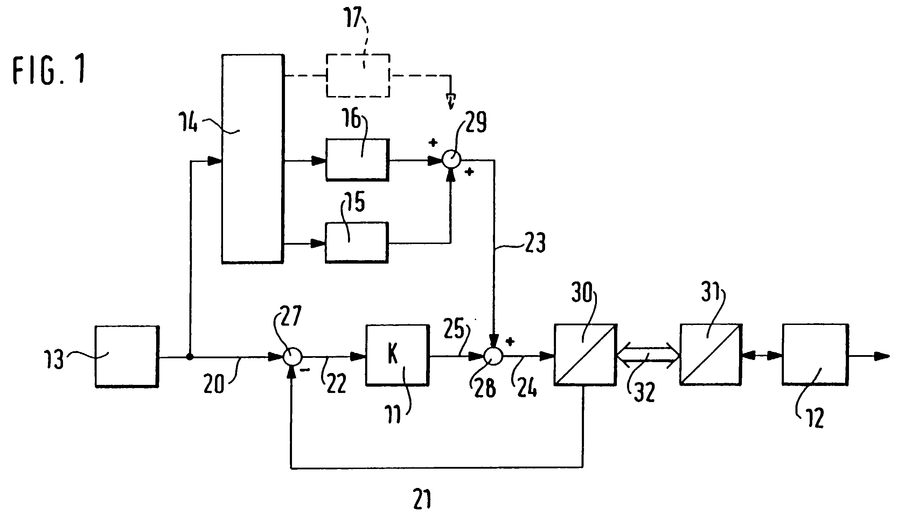

Das in Figur 1 gezeigte Strukturbild beinhaltet einen Lageregelkreis, umfassend einen Interpolator 13, einen Regler 11, die Schnittstellen 30, 31 und die Regelstrecke 12, sowie eine Anordnung, welche die Vorsteuerung der Lageführungsgröße ausführt, umfassend ein Differenzierglied 14 sowie mehrere Proportionalglieder 15 bis 17. Weitere, parallel zu den Blocken 15 bis 17 angeordnete Proportionalglieder können vorgesehen sein, sind in der Figur 1 jedoch nicht dargestellt.

Die Regelstrecke 12 umfaßt eine der i Achsen der Werkzeugmaschine mit dem/den zugehörigen Antrieb(-en). Die Regelstrecke 12 ist lediglich prifizipiell dargestellt. Sie kann ihrerseits weitere unterlagerte Regelkreise enthalten, beispielsweise einen Drehzahlregelkreis. Die Übertragungsfaktoren der Proportionalitätsglieder 15 bis 17 sind von außen einstellbar. Sie verfügen hierzu zweckmäßig jeweils über Speichermittel, in welchen die Werte der Proportionalfaktoren abgelegt sind. Regelgröße ist der Lage-Istwert 21, Führungsgröße ist ein im Interpolator 13 erzeugtes Signal 20. Das aus der Differenz von Führungsgröße 20 und Istwert 21 gebildete Differenzsignal 22 wird im Regler 11 verstärkt. Der Regler ist im allgemeinen ein Proportionalregler mit einem Verstärkungsfaktor K. Dem Reglerausgangssignal 25 wird an der Summierstelle 28 das Vorsteuersignal 23 hinzugefügt. Vorsteuersignal 23 und Reglerausgangssignal 25 bilden das Führungssignal 24, welches über die reglerseitige Antriebsschnittstelle 30 und die antriebsseitige Schnittstelle 31 der Regelstrecke 12 zugeführt wird. Die Datenübertragung zwischen den Schnittstellen 30 und 31 erfolgt vorzugsweise in digitaler Form. Der Lage-Istwert 21 wird vom Ausgang der Regelstrecke 12 über die Schnittstellen 31 und 30 zur Summierstelle 27 rückgeführt. Das Führungsgrößensignal 20 wird gleichzeitig dem Differnzierglied 14 zugeführt. Dieses bildet Zeitableitungen d/dt, d/dt, usw. zu dem Führungsgrößensignal 20 und führt diese in zunehmender Ableitungsordnung den Proportionalgliedern 15, 16, 17, usw. zu. Die Ausgangssignale der Proportionalglieder 15, 16, 17, usw. werden im Summierpunkt 29 vereint und bilden das Vorsteuersignal 23.

Die Funktionsblöcke 11 und 13 sind in der Regel in Form eines Computerprogramms in einem Mikrorechner realisiert. Zweckmäßig werden die Blöcke 14 bis 17 ebenfalls in Form eines Programms in demselben Rechner realisiert. Für jede Achse der Werkzeugmaschine ist eine Regelanordnung mit der in Figur 1 gezeigten Struktur vorhanden.

Die Durchführung des Verfahrens zur Ermittlung der Vorsteuerparameter wird im nachfolgenden Abschnitt näher erläutert.

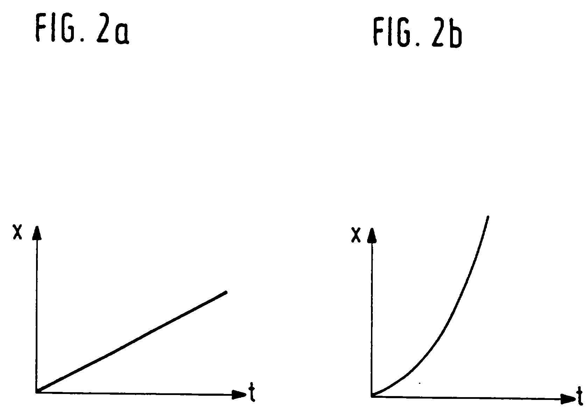

Das Verfahren wird achsweise für jede der i Achsen der Maschine einzeln durchgefürht. Die jeweils im Verfahren befindliche Achse wird im folgenden mit "i-te Achse" bezeichnet. Die übrigen Achsen sind passiv geschaltet. Für die Ermittlung der Vorsteuerparameter wird die Vorsteuerung zunächst ausgeschaltet. Das Signal 23 ist somit zunächst gleich Null. In einem ersten Verfahrensschritt wird im Interpolator 13 für die i-te Achse der Maschine ein Lage-Führungsgrößensignal 20 erzeugt, das in Betrachtung als Funktion der Zeit eine Rampenform hat. Figur 2a zeigt ein prinzipielles Beispiel für ein geeignetes Signal. Aufgetragen ist die Lage x (Ordinate) über der Zeit t (Abszisse). Die durch dieses Signal angesteuerte i-te Achse bewegt sich dadurch auf einer sich mit konstanter Geschwindigkeit verändernden Positionsgeraden. Das Signal 20 wird solange aufrechterhalten, bis sich das durch das Signal 20 angeregte System 12, also die i-te Achse, im eingeschwungenen Zustand befindet und sich eine gleichbleibende Regeldifferenz 22 zwischen Soll- und Ist-Lage einstellt. Der Wert der bleibenden Regeldifferenz 22 wird mit dem Verstärkungsfaktor K des Reglers 11 multipliziert und durch den Wert V der Rampensteigung des Führungsgrößensignals 20 dividiert. Hierzu wird der Wert V der Rampensteigung durch Differentiation der in Figur 2a dargetellten Kurve des Führungsgrößensignals nach der Zeit im Differenzierglied 14 ermittelt. Das nach Multiplikation und Division erhaltene Ergebnis wird im Speicher des Proportionalitätsgliedes 15 abgelegt. Der so gebildete Wert stellt den ersten, im folgenden Geschwindigkeitsvorsteuerparameter genannten Vorsteuerparameter für die i-te Achse dar.

Nach Ermittlung des Geschwindigkeitsvorsteuerparameters für die i-te Achse wird in einem nachfolgenden zweiten Verfahrensabschnitt für dieselbe Achse ein zweiter Vorsteuerparameter ermittelt. Voraussetzung für die Durchführung des zweiten Verfahrensabschnittes ist, daß der Geschwindigkeitsvorsteuerparameter bereits bekannt ist. Für den zweiten Verfahrensabschritt wird für die i-te Achse die Vorsteuerung in Betrieb genommen. Dabei wird allerdings nur das Proportionalitätsglied 15 mit dem aus dem ersten Verfahrensschritt bekannten Geschwindigkeitscorsteuerparameter aktiviert. Die weiteren Proportionalitätsglieder 16, 17, usw. bleiden inaktiv. Am Ausgang der Summierstelle 29 liegt somit ein mit dem Geschwindigkeitsvorsteuerparameter gewichtetes Vorsteuersignal 23 an. Die weitere Verfahrensdurchführung zur Ermittlung des zweiten Vorsteuerparameters verläuft prinzipiell analog wie die Durchführung des ersten Verfahrensabschnittes. Der Interpolator 13 erzeugt für die i-te Achse ein zeitveränderliches Führungsgrößensignal 20. Dieses hat im zweiten Verfahrensabschnitt als Funktion der Zeit die Gestalt einer Parabel zweiter Ordnung. Ein solches Signal ist in Figur 2b qualitativ gezeigt, aufgetragen ist die Lage x über der Zeitachse t. Dieses Signal wird wiederum solange aufrechterhalten, bis das angeregte System 12, das heißt die i-te Achse, eingeschwungen ist und sich eine bleibende Regelabweichung 22 einstellt. Der Wert der bleibenden Regelabweichung wird wiederum mit der Verstärkung K des Reglers multipliziert, durch den Wert der Krümmung a des Führungsgrößensignales 20, welche durch zweifache Differentation des Führungsgrößensignals 20 nach der Zeit im Differenzierglied 14 ermittelt wird, dividiert und in den Speicher des zweiten Proportionalitätsgliedes 16 eingelesen. Der gebildete Wert stellt den zweiten, im folgenden Beschleunigungsvorsteuerparameter genannten Vorsteuerparameter dar.

Das prinzipielle Vorgehen bei der Ermittlung der zwei ersten Vorsteuerparameter läßt sich sinngemäß anschließend zur Ermittlung beliebig vieler weiterer Vorsteuerparameter höherer Ordnung für die i-te Achse sukzessiv wiederholen. So kann ein dritter Vorsteuerparameter, dieser entspricht einer Ruckvorsteuerung, bestimmt werden, indem zunächst neben dem ersten Proportionalglied 15 auch das zweite Proportionalglied 16, für welches der Proportionalitätsfaktor im zweiten Verfahrensabschnitt ermittelt wurde, aktiviert wird. Am Ausgang des Summierstelle 29 liegt somit ein Vorsteuersignal 23 an, welches aus einem mit dem Geschwindigkeitsvorsteuerparameter gewichteten geschwindigkeitsproportionalen Anteil und aus einem mit dem Beschleunigungsvorsteuerparameter gewichteten beschleunigungsproportionalen Anteil besteht. Im Interpolator wird ein Führungsgrößensignal 20 erzeugt, das als Funktion der Zeit die Gestalt einer Parabel dritter Ordnung hat.Das Führungsgrößensignal 20 wird solange ausgegeben, bis sich die i-te Achse im eingeschwungenen Zustand befindet und sich eine gleichbleibende Regelabweichung 22 einstellt. Der Wert der Regelabweichung 22 wird wiederum mit der Verstärkung des Reglers 11 multipliziert, durch den Wert der dritten Ableitung des Sollwertes, welche im Differenzierglied 14 gebildet wird, dividiert-und in den Speicher des Proportionalitätsgliedes 17 eingelesen. Der so gewonnene Wert stellt den dritten Vorsteuerparameter dar.

Durch Wiederholung des Verfahrens können weitere Vorsteuerparameter höherer Ordnung bestimmt werden. Der Vorteil der Verwendung von Vorsteuerparametern höherer Ordnung besteht darin, daß dadurch für, etwa während des Regelbetriebes der Maschine auftretende, beliebige Führungsgrößensignale der Schleppabstand zunehmend kleiner wird. Für die Praxis wird es im allgemeinen aber genügen, einen Geschwindigkeitsvorsteuerparameter, einen Beschleunigungsvorsteuerparameter, sowie einen Ruckvorsteuerparameter zu bestimmen.

Das Verfahren zur Ermittlung der Vorsteuerparameter für eine, die i-te Achse, wird anschließend für jede weitere Achse wiederholt.

Die für alle Achsen ermittelten vorsteuerparameter werden für den Regelbetrieb der Maschine unverändert in die numerische Steuerung übernommen. Eine erneute Bestimmung der Vorsteuerparameter ist erst erforderlich, wenn die Regelstrecke der Werkzeugmaschine verändert wird. Dies könnte beispielsweise nach mechanischen Änderungen am Antrieb einer Achse der Fall sein.

Voraussetzung für die Durchführung des erfindungsgemäßen Verfahrens ist, daß die einzelnen Achsen der Werkzeugmaschine hinreichend entkoppelt sind, sowie ferner, daß die einzelnen Achsen für sich jeweils ein lineares Übertragungsverhalten aufweisen. Unter Beachtung dieser Voraussetzung ist das Verfahren dann für jedes beliebige System einsetzbar. Die Kenntnis des genauen Übertragungsverhaltens der Werkzeugmaschine bzw. ihrer einzelnen Komponenten ist nicht erforderlich. Das Verfahren ist insbesondere für die Implementierung in einem Mikrorechner, über den numerisch gesteuerte Werkzeugmaschinen ohnehin verfügen, geeignet. Es bietet sich insbesondere an, eine automatisierte Verfahrensdurchführung vorzusehen, welche bei Inbetriebnahme einer Werkzeugmaschine selbsttätig ausgeführt wird.

## Patentansprüche

1. Verfahren zur Ermittlung eines n+1sten Vorsteuerparameters, mit n = 0, 1, 2, ..., zur Wichtung eines aus der Führungsgröße eines Lageregelkreises einer i Achsen aufweisenden numerisch bahngesteuerten Maschine, mit i = 1, 2, 3, ..., durch n+1fache Differentiation nach der Zeit abgeleiteten Signales, wenn n Vorsteuerparameter zur Wichtung weiterer n aus der Führungsgröße abgeleiteter Signale bekannt sind, wobei aus den gewichteten Signalen ein Vorsteuersignal (23) gewonnen wird, welches auf den Lageregelkreis aufgeschaltet wird,
gekennzeichnet durch folgende Verfahrensschritte:
a) der Lageregelung wird ein aus n Anteilen bestehendes Vorsteuersignal (23) aufgeschaltet, wobei jeder Anteil in aufsteigender Ordnung bis zur Ordnung n jeweils aus einem Wichtungsparameter und einem durch n-fache Differentiation nach der Zeit aus der Führungsgröße abgeleiteten Signal gebildet wird,
b) der Lageregelung der i-ten Achse wird als Führungsgröße (20) ein Lagesollwert vorgegeben, der sich in Form einer Parabel der Ordnung n+1 proportional zu tⁿ⁺¹ mit der Zeit ändert,
c) die sich einstellende bleibende Regelabweichung (22) der i-ten Achse zwischen Führungsgröße (20) und Lageistwert (21) wird erfaßt,
d) als n-1ster Vorsteuerparameter wird ein zu der gemessenen bleibenden Regelabweichung (22) proportionaler Wert gewählt.

2. Verfahren nach Anspruch 1, dadurch gekennzeichnet, daß ein Geschwindigkeitsvorsteuerparameter bestimmt wird, indem die bleibende Regeldifferenz (22) mit dem Verstärkungsfaktor (K) des Reglers (11) multipliziert und durch den Geschwindigkeitssollwert V dividiert wird, wobei der Wert V durch Differentation nach der Zeit aus der für die Ermittlung des Geschwindigkeitsvorsteuerparameters vorgegebenen rampenförmigen Lagesollwertkurve bestimmt wird.

3. Verfahren nach Anspruch 1, dadurch gekennzeichnet, daß ein Beschleunigungsvorsteuerparameter bestimmt wird, indem die bleibende Regeldifferenz (22) mit dem Verstärkungsfaktor (K) des Reglers (11) multipliziert und durch den Beschleunigungssollwert A dividiert wird, wobei der Wert A durch zweifache Differentation nach der Zeit aus der für die Ermittlung des Beschleunigungsvorsteuerparameters vorgegebenen parabelförmigen Lagesollwertkurve hervorgeht.

4. Verfahren nach Anspruch 1, dadurch gekennzeichnet, daß ein n + 1-te Vorsteuerparameter bestimmt wird, indem die bleibende Regeldifferenz (22) mit dem Verstärkungsfaktor (K) des Reglers (11) multipliziert und durch denjenigen Wert dividiert wird, der sich durch n + 1-fache Differentation nach der Zeit aus der für die Ermittlung des n + 1-ten Vorsteuerparameters vorgegebenen Lagesollwertkurve ergibt.

## Claims

1. Method for determining an n+th pilot control parameter, where n = 0, 1, 2, ..., for weighting a signal which is derived by differentiation n+1 times with respect to time from the reference variable of a position control loop of a digitally path-controlled machine having i axes where i = 1, 2, 3, ..., when n pilot control parameters are known for weighting a further n signals derived from the reference variable, a pilot control signal (23) being obtained from the weighted signals, which pilot control signal (23) is connected to the position control loop,
characterized by the following method steps:
a) a pilot control signal (23) comprising n elements is connected to the position controller, each element being formed, in rising order up to the order n, in each case from a weighting parameter and a signal which is derived by differentiation n times with respect to time from the reference variable,
b) a required position value, which varies with time in the form of a parabola of order n+1 in proportion to tⁿ⁺¹, is predetermined as the reference variable (20) for position control of the i-th axis,
c) the remaining controller (22) which occurs on the i-th axis between the reference variable (20) and the actual position value (21) is detected,
d) a value which is proportional to the measured remaining controller (22) is selected as the n-1th pilot control parameter.

2. Method according to Claim 1, characterized in that a speed pilot control parameter is determined in that the remaining control difference (22) is multiplied by the gain factor (K) of the controller (11) and is divided by the required speed value V, the value V being determined by differentiation with respect to time from the required position value curve which is in the form of a ramp and is predetermined for the determination of the speed pilot control parameter.

3. Method according to Claim 1, characterized in that an acceleration pilot control parameter is determined in that the remaining control difference (22) is multiplied by the gain factor (K) of the controller (11) and is divided by the required acceleration value A, the value A being obtained by double differentiation with respect to time from the parabolic required position value curve which is predetermined for the determination of the acceleration pilot control parameter.

4. Method according to Claim 1, characterized in that an n + 1th pilot control parameter is determined in that the remaining control difference (22) is multiplied by the gain factor (K) of the controller (11) and is divided by that value which results from differentiation n + 1 times with respect to time from the required position value curve which is predetermined for the determination of the n + 1th pilot control parameter.

## Revendications

1. Procédé pour déterminer l'un des (n+1) paramètres pilotes (n = 0, 1, 2, ..., pour pondérer un signal correspondant à la différentiation d'ordre (n+1) en fonction du temps de la grandeur guide d'un circuit de régulation de position d'une machine à commande de trajectoire ayant i axes (i = 1, 2, 3,...), lorsqu'on connaît (n) paramètre pilote pour pondérer (n) autres signaux dérivés de la grandeur guide, et obtenir un signal pilote (23) à partir des signaux pondérés, appliqué au circuit de régulation de position, procédé caractérisé par les étapes suivantes:
a) à la régulation de position on applique un signal pilote (23) formé de (n) composants chaque composant étant formé dans l'ordre croissant jusqu'à l'ordre (n), chaque fois d'un paramètre de pondération et d'un signal dérivé de la grandeur guide par une différentiation d'ordre (n) en fonction du temps,
b) on prédétermine une valeur de consigne de position à la régulation de position d'axes i, comme grandeur guide (20), valeur de consigne qui varie sous la forme d'une parabole d'ordre (n+1), proportionnelle à (tⁿ⁺¹) en fonction du temps,
c) on détecte la déviation de régulation restante (22), qui s'établit pour l'axe i, entre la grandeur guide (20) et la valeur réelle de position (21),
d) comme paramètre pilote d'ordre (n-1) on choisit une valeur proportionnelle à la déviation de régulation constante mesurée (22).

2. Procédé selon la revendication 1, caractérisé en ce qu'on détermine un paramètre pilote de vitesse en multipliant la différence de régulation restante (22) avec le coefficient d'amplification (K) du régulateur (11) et on divise par la valeur de consigne de vitesse (V), la valeur (V) étant définie par différentiation en fonction du temps de la courbe de valeur de consigne de position en forme de rampe, prédéterminée pour déterminer le paramètre pilote de vitesse.

3. Procédé selon la revendication 1, caractérisé en ce qu'on détermine un paramètre pilote d'accélération en multipliant la différence de régulation restante (22) avec le coefficient d'amplification (K) du régulateur (11) et en divisant par la valeur de consigne de l'accélération (A), (A) étant obtenu par la double différentiation en fonction du temps de la courbe de valeur de consigne de position en forme de parabole, prédéterminée, prévue pour déterminer le paramètre pilote d'accélération.

4. Procédé selon la revendication 1, caractérisé en ce qu'on définit un paramètre pilote d'ordre (n+1) en multipliant la différence de régulation restante (22) avec le coefficient d'amplification (K) du régulateur (11) et en divisant par la valeur résultant de la différentiation d'ordre (n+1) en fonction du temps de la courbe de valeur de consigne de position prédéterminée pour déterminer le paramètre pilote d'ordre (n+1).
